# EUROPEAN PATENT SPECIFICATION

(11) **EP 0 688 493 B1**
(45) Date of publication and mention of the grant of the patent: **18.08.1999**
(21) Application number: 95610030.9
(22) Date of filing: 07.06.1995
(51) Int. Cl.: A01D 34/66

(54) **A mower with hollow rotating moving means**
Mäher mit hohler rotierender Trommel
Faucheuse à tambour rotatif creux

(30) Priority: 20.06.1994 DK 72694
(43) Date of publication of application: 27.12.1995
(73) Proprietor: JF-FABRIKEN - J. FREUDENDAHL A/S, DK-6400 Sonderborg (DK)
(72) Inventor: Freudendahl, Jorn, DK-6400 Sonderborg (DK)
(74) Representative: Raffnsöe, Knud Rosenstand

(56) References cited:
- EP-A- 0 118 952
- EP-A- 0 213 052
- EP-A- 0 240 086
- EP-A- 0 400 699
- GB-A- 2 118 814

## Description

The present invention relates to a mower with a mowing means rotating about a preferably vertical axis and being provided with a hollow body.

Mowers of this type are well-known, and a common problem in connection therewith is that material, such as dust, soil and pieces of grass, which during the operation of the mower are whirled around the mowing means, tend to penetrate into the hollow body and settle in its inner hollow space, where this material tends to settle asymmetrically relative to the rotational axis of the mower, thereby unbalancing the mowing means, which may cause a breakdown, because the mowing means during operation rotate with a high number of revolutions per minute.

From EP-A-0 240 086 a mower of the type stated by way of introduction is known, in which it has been tried to solve the above-mentioned problem by ventilating the hollow space of the mower in order to blow out entering material concurrently with its entering.

The object of the invention is to provide another solution to the problem.

The object is met by a mower, which is characteristic in that the hollow space of the hollow body is at least partially filled up with a light, rigid material. In that way the the space is barred from incoming material, which thus at the most penetrate in so small amounts that it does not create any problems as to unbalance.

The light, rigid material may for instance be polyurethane foam or polystyrene foam (styropor).

The invention will be explained in detail in the following by means of embodiments with reference to the schematic drawing, in which
Fig. 1 shows a section through a cutter disc with a hollow carrier, the hollow space of which is filled up,
Fig. 2 a part of a drum mower without cutter disc and the drum casing partially removed, and
Fig. 3 a view corresponding to Fig. 2 of a second embodiment of a drum mower.

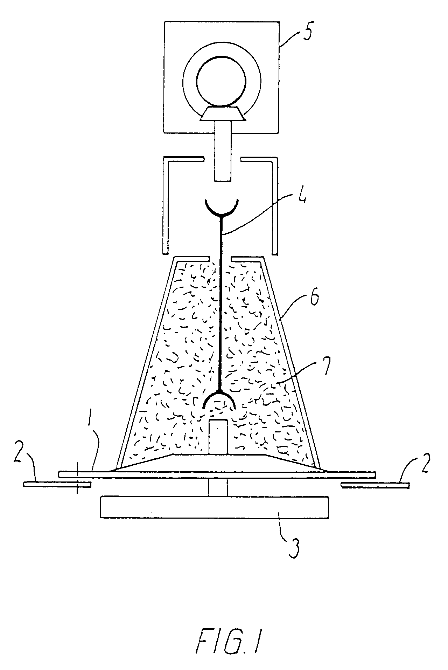

Fig. 1 shows a cutter disc 1 with cutters 2 mounted on a cutter bar 3. The cutter disc 1 is driven by a power transmission shaft 4 and an angular gear 5 of a drive not shown. The cutter disc 1 carries a carrier 6, the object of which is during operation to transport the cut material and to form it into windrows. The carrier has an interior hollow space which is filled up with a light mateial 7, which is so rigid that it is stable against the forces to which it is exposed during operation. The material 7 may for in-stance be polyurethane foam or polystyrene foam. It may either be foamed in situ or it may be formed separately, perhaps divided vertically in two halves to facilitate the mounting.

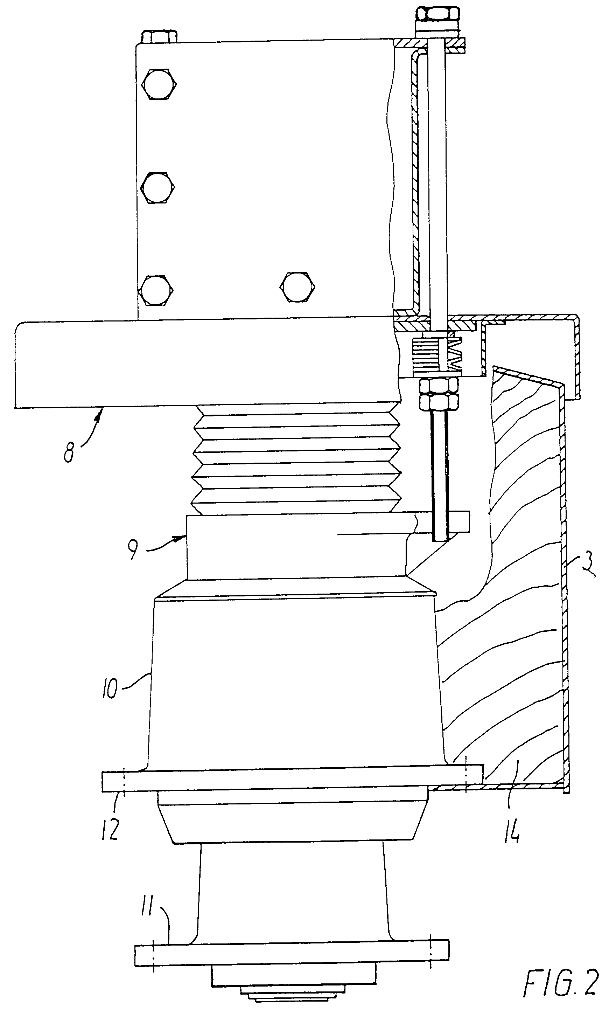

Fig. 2 shows a frame part 8 of a per se known mower which carries the interior parts of a cutter drum. These parts comprise a stationary part 9 and a rotating part 10. A lower part 11 is adapted to carry a ground-engaging shoe, whereas the rotating part 10 at a flange 12 carries a drum casing 13, of which only a part is shown, and is adapted to carry a cutter disc. As something novel the drum casing 13 is according to the invention partially filled up with a light, rigid material 14 corresponding to the material 7 in Fig. 1. As will be seen, the material 14 has a certain distance to the stationary part 9 in order not to run into it, when it rotates itself with the rotating part 10.

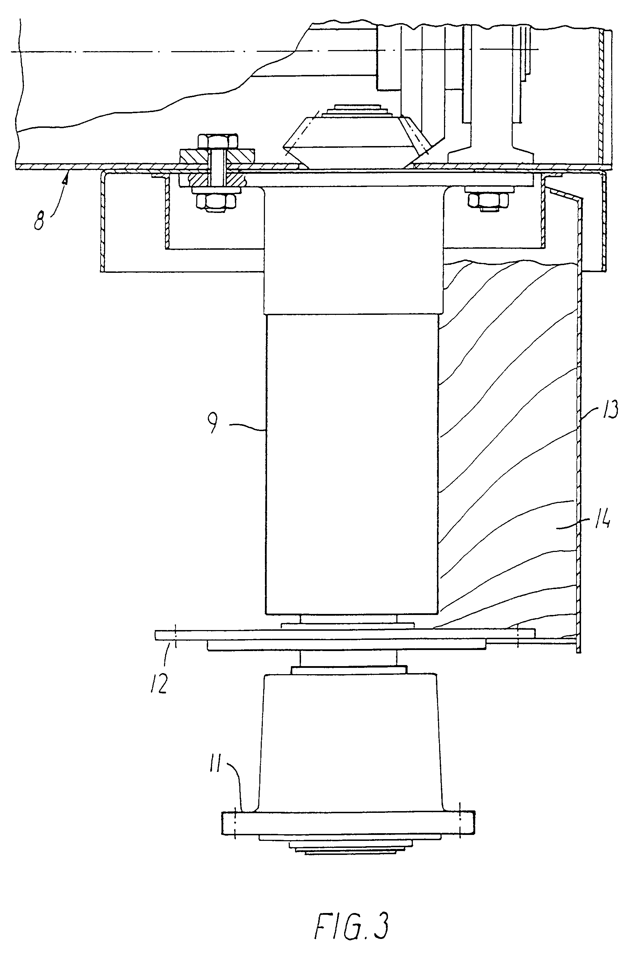

Fig. 3 is a partial view of a second embodiment of a per se known drum mower with the frame part 8, the stationary part 9, the flange 12 of the rotating part, and the lower part 11. The drum casing 13 is like in the embodiment shown in Fig. 2 filled up with a light, rigid material 14, which in this case has been foamed in situ, a slip agent having in advance been applied to the stationary part 9. At the running-in of the machine the necessary clearance between the material 14 and the stationary part 9 will be created on account of deformation of the material 14 due to contact with the stationary part 9.

## Claims

1. A mower with a mowing means (1) rotating about a preferably vertical axis and being provided with a hollow body (6; 13), **characterized** in that the hollow space of the hollow body (6; 13) is at least partially filled up by a light, rigid material (7;14).

2. A mower according to claim 1, **characterized** in that the material (7; 14) comprises polyurethane foam and/or polystyrene foam.

3. A mower according to claim 1 or 2, **characterized** in that the material (7; 14) is provided in form of one or more shaped pieces.

4. A mower according to claim 1 or 2, **characterized** in that the material (7; 14) is moulded or foamed in situ.

## Patentansprüche

1. Mäher mit einem um eine im wesentlichen senkrechte Achse drehenden Mähorgan (1) und umfassend einen hohlen Körper (6; 13), dadurch **gekennzeichnet**, dass der Hohlraum des hohlen Körpers (6; 13) zumindest teilweise mit einem leichten, festen Material (7; 14) ausgefüllt ist.

2. Mäher nach Anspruch 1, dadurch **gekennzeichnet**, dass das Material (7; 14) Polyurethan-Schaum und/oder Polystyren-Schaum umfasst.

3. Mäher nach Anspruch 1 oder 2, dadurch **gekennzeichnet**, dass das Material (7; 14) in einem oder mehreren Formstücken hergestellt ist.

4. Mäher nach Anspruch 1 oder 2, dadurch **gekennzeichnet**, dass das Material (7; 14) in situ gegossen oder aufgeschäumt ist.

## Revendications

1. Faucheuse avec un organe de coupe (1) rotatif autour d'un axe préférablement vertical et étant pourvu d'un corps creux (6; 13), **caractérisée** en ce que la cavité du corps creux (6; 13) est au moins partiellement remplie par une matière légère et rigide (7; 14).

2. Faucheuse selon la revendication 1, **caractérisée** en ce que la matière (7; 14) comprend de la mousse polyuréthanne et/ou de la mousse de polystyrène.

3. Faucheuse selon la revendication 1 ou 2, **caractérisée** en ce que la matière (7; 14) est pourvue en forme d'une ou de plusieurs pièces façonnées.

4. Faucheuse selon la revendication 1 ou 2, **caractérisée** en ce que la matière (7; 14) est moulée ou écumée sur place.
